# EUROPÄISCHE PATENTANMELDUNG

(11) **EP 3 133 360 A1**
(43) Veröffentlichungstag der Anmeldung: **22.02.2017**
(21) Anmeldenummer: 16182447.9
(22) Anmeldetag: 02.08.2016
(51) Int. Cl.: F25D 31/00

(54) **VORRICHTUNG ZUM EINFRIEREN, TRANSPORTIEREN, LAGERN UND/ODER AUFTAUEN VON FLUIDEN SOWIE EIN TRÄGER FÜR DERARTIGE VORRICHTUNGEN**

(30) Priorität: 18.08.2015 DE 102015215668
(71) Anmelder: Bilfinger Industrietechnik Salzburg GmbH, 5020 Salzburg (DE)
(72) Erfinder: Machreich, Michael, 5662 Bruck (AT); Schöberl, Volker, 69190 Walldorf (DE); Hoffmann, Johannes, 69117 Heidelberg (DE)
(74) Vertreter: Patent- und Rechtsanwälte Ullrich & Naumann

(57) **Zusammenfassung**

Eine Vorrichtung zum Einfrieren, Transportieren, Lagern und/oder Auftauen von Fluiden (1), insbesondere biopharmazeutisch hergestellten Wirkstoffen und Produkten, mit einem Behälter (2) zur Aufnahme eines Fluids (1) in einem Aufnahmebereich (3) des Behälters (2), wobei in dem Behälter (2) zusätzlich ein hohler Bereich (4) zur Aufnahme eines Wärmeübertragungsmediums (5) für das Fluid (1) ausgebildet oder angeordnet ist, ist im Hinblick auf ein besonders sicheres und gleichmäßiges Einfrieren eines Fluids (1) mit konstruktiv einfachen Mitteln derart ausgestaltet und weitergebildet, dass in dem Behälter (2) mindestens ein weiterer hohler Bereich (6) zur Aufnahme eines Wärmeübertragungsmediums (5) für das Fluid (1) ausgebildet oder angeordnet ist. Des Weiteren ist ein Träger mit mehreren Vorrichtungen angegeben, wobei der Träger ein Grundelement (13) zur Anordnung der Vorrichtungen auf dem Grundelement (13) aufweist.

## Beschreibung

Die vorliegende Erfindung betrifft eine Vorrichtung zum Einfrieren, Transportieren, Lagern und/oder Auftauen von Fluiden, insbesondere biopharmazeutisch hergestellten Wirkstoffen und Produkten, mit einem Behälter zur Aufnahme eines Fluids in einem Aufnahmebereich des Behälters, wobei in dem Behälter zusätzlich ein hohler Bereich zur Aufnahme eines Wärmeübertragungsmediums für das Fluid ausgebildet oder angeordnet ist. Des Weiteren betrifft die Erfindung einen Träger mit mehreren derartigen Vorrichtungen, wobei der Träger ein Grundelement zur Anordnung der Vorrichtungen auf dem Grundelement aufweist.

Vorrichtungen der eingangs genannten Art sind aus der Praxis bekannt und existieren in unterschiedlichen Ausführungsformen. Beispielsweise werden biopharmazeutisch hergestellte Wirkstoffe - in der Regel Proteine - in einer Lösung in speziellen Behältern - "Freeze-Thaw-Vessel" - bei bis zu etwa -70°C tiefgekühlt. Dadurch werden sie haltbar und können über längere Zeiträume gelagert oder in geschlossener Kühlkette transportiert werden.

Solche Systeme werden bereits von verschiedenen Unternehmen angeboten: Einfrier- und Auftauanlagen - Freeze & Thaw-Station -, Behälter - Vessel - und Reinigungsanlagen - "CIP/SIP" - für diese Behälter sowie labormaßstäbliches Equipment für die Wirkstoffentwicklung. Jeder Wirkstoff hat spezielle Eigenschaften und daher müssen Anlagen und/oder Behälter unter Berücksichtigung dieser Produkteigenschaften individuell ausgelegt werden.

Nachteile der bisherigen Systeme bestehen insbesondere in dem durch die Behältergeometrie bedingten ungleichmäßigen Einfrieren des Fluids, wodurch es durch Kryokonzentration zu Schäden am Produkt kommen kann, sowie in einem langwierigen und kostenintensiven Scale-Up durch damit verbundene Validierungsaktivitäten.

Alternativ zu derartigen Behältern oder Systemen können Single-use Lösungen wie Kunststoffflaschen oder Beutel eingesetzt werden, die eine höhere Produktionsflexibilität und niedrigere Anfangsinvestitionen bei jedoch höheren Betriebskosten versprechen.

Aus der Praxis sind insbesondere Behälter mit unterschiedlich angeordneten Wärmeübertragerrippen im Behälter oder mit einem zentral im Behälter positionierten Rohr für ein Kühlmedium bekannt. Des Weiteren sind Vorrichtungen zur Rezirkulation einer aufgetauten Wirkstofffraktion zur Beschleunigung des Auftauprozesses bekannt.

Insbesondere die bekannte Vorrichtung mit einem zentral im Behälter positionierten Rohr für ein Kühlmedium bildet eine gattungsgemäße Vorrichtung mit einem Behälter zur Aufnahme eines Fluids in einem Aufnahmebereich des Behälters, wobei in dem Behälter durch das zentral positionierte Rohr zusätzlich ein hohler Bereich zur Aufnahme eines Wärmeübertragungsmediums für das Fluid ausgebildet oder angeordnet ist.

Der vorliegenden Erfindung liegt nunmehr die Aufgabe zugrunde, eine Vorrichtung zum Einfrieren, Transportieren, Lagern und/oder Auftauen von Fluiden der eingangs genannten Art derart auszugestalten und weiterzubilden, dass ein besonders sicheres und gleichmäßiges Einfrieren eines Fluids mit konstruktiv einfachen Mitteln realisierbar ist.

Erfindungsgemäß wird die voranstehende Aufgabe durch eine Vorrichtung mit den Merkmalen des Anspruchs 1 gelöst. Danach ist die Vorrichtung derart ausgestaltet und weitergebildet, dass in dem Behälter mindestens ein weiterer hohler Bereich zur Aufnahme eines Wärmeübertragungsmediums für das Fluid ausgebildet oder angeordnet ist.

In erfindungsgemäßer Weise ist erkannt worden, dass durch geschickte Anordnung oder Bereitstellung eines Wärmeübertragungsmediums die voranstehende Aufgabe auf überraschend einfache Weise gelöst wird. Hierzu ist in weiter erfindungsgemäßer Weise in dem Behälter mindestens ein weiterer hohler Bereich zur Aufnahme eines Wärmeübertragungsmediums für das Fluid ausgebildet oder angeordnet. Durch die Ausbildung oder Anordnung eines weiteren hohlen Bereichs für das Wärmeübertragungsmedium kann eine Wechselwirkung mit dem Fluid auf besonders flexible und sichere Weise bereitgestellt werden. Dabei kann durch den weiteren hohlen Bereich eine zusätzliche Wärmeübertragungsfläche bereitgestellt werden, die ein schnelleres und sichereres Einfrieren eines Fluids ermöglicht. Hierdurch kann einem ungleichmäßigen Einfrieren des Fluids und einer Kryokonzentration effektiv entgegengewirkt werden.

Folglich ist mit der erfindungsgemäßen Vorrichtung eine Vorrichtung angegeben, die ein besonders sicheres und gleichmäßiges Einfrieren eines Fluids mit konstruktiv einfachen Mitteln ermöglicht.

Im Hinblick auf ein besonders sicheres und gleichmäßiges Einfrieren eines Fluids kann der mindestens eine weitere hohle Bereich derart in dem Behälter ausgebildet oder angeordnet sein, dass eine Wärmeübertragung auf das Fluid und/oder von dem Fluid von mindestens zwei Seiten aus realisierbar ist. Durch eine derartige Wechselwirkung zwischen dem Wärmeübertragungsmedium und dem Fluid von zwei Seiten aus ist ein besonders sicheres Einfrieren und in weiter vorteilhafter Weise auch ein besonders sicheres und gleichmäßiges Auftauen eines gefrorenen Fluids ermöglicht. Einseitig erzeugte Kryokonzentrationen in dem Fluid können hierdurch wirksam vermieden werden.

Weiterhin im Hinblick auf ein besonders sicheres und gleichmäßiges Einfrieren eines Fluids kann der hohle Bereich derart in einem durch einen der weiteren hohlen Bereiche gebildeten Raumbereich ausgebildet oder angeordnet sein, dass sich der Aufnahmebereich zumindest bereichsweise zwischen dem hohlen Bereich und dem mindestens einen weiteren hohlen Bereich erstreckt. Mit anderen Worten bildet bei dieser Ausführung ein weiterer hohler Bereich einen vorzugsweise geschlossenen Raumbereich, in dem der - erste oder ursprüngliche - hohle Bereich angeordnet ist, wobei sich der Aufnahmebereich zumindest bereichsweise zwischen diesen hohlen Bereichen erstreckt. Dabei ist der Aufnahmebereich zumindest bereichsweise und vorzugsweise vollständig oder nahezu vollständig von dem weiteren hohlen Bereich umfasst. Diese Anordnung ermöglicht ein besonders sicheres und gleichmäßiges Einfrieren eines Fluids und auch Auftauen eines gefrorenen Fluids.

Bei einer besonders einfachen konkreten Ausgestaltung kann der hohle Bereich ein Rohr aufweisen oder als Rohr ausgebildet sein. Der Aufnahmebereich kann dabei im Wesentlichen vollständig um das Rohr angeordnet oder ausgebildet sein.

In weiter vorteilhafter Weise kann der mindestens eine weitere hohle Bereich ein Rohr aufweisen, in dem beispielsweise der - erste oder ursprüngliche - hohle Bereich angeordnet ist. Der Aufnahmebereich kann in diesem Fall zwischen den beiden Rohren ausgebildet oder angeordnet sein.

In besonders vorteilhafter Weise kann der mindestens eine weitere hohle Bereich als Ringraum ausgebildet sein, der vorzugsweise um den Aufnahmebereich und/oder den hohlen Bereich verläuft. In diesem Fall kann der - erste oder ursprüngliche - hohle Bereich durch ein Rohr gebildet sein, um das der Aufnahmebereich in Form eines Ringraums - vorzugsweise konzentrisch zu dem Rohr - angeordnet oder ausgebildet ist, wobei um diesen Ringraum der mindestens eine weitere hohle Bereich - vorzugsweise konzentrisch zu dem Rohr und diesem Ringraum - ebenfalls als Ringraum verläuft. Der Aufnahmebereich ist dabei quasi sandwichartig zwischen den hohlen Bereichen angeordnet oder ausgebildet, um eine besonders sichere Wärmeübertragung zwischen Fluid und Wärmeübertragungsmedium bereitzustellen.

Im Konkreten kann der Aufnahmebereich als Ringraum, vorzugsweise zwischen einer Wärmeübertragungsfläche des hohlen Bereichs und einer Wärmeübertragungsfläche des mindestens einen weiteren hohlen Bereichs oder zwischen dem hohlen Bereich und dem mindestens einen weiteren hohlen Bereich, ausgebildet sein. Hierdurch ist eine Anordnung aus einem zentralen, vorzugsweise zylinderförmigen, hohlen Bereich in der Mitte eines Behälters mit darum vorzugsweise konzentrisch angeordnetem ringraumförmigen Aufnahmebereich und darum vorzugsweise konzentrisch angeordnetem ringraumförmigen weiteren hohlen Bereich ermöglicht. Der ganz grundsätzlich zylinderförmig realisierbare Behälter kann in diesem Fall quasi vorzugsweise konzentrisch ineinander angeordnete Rohre aufweisen, die eine Abfolge von hohlem Bereich, Aufnahmebereich und hohlem Bereich bilden. Hierdurch ist ein besonders sicheres und gleichmäßiges Einfrieren eines Fluids und auch Auftauen eines gefrorenen Fluids ermöglicht, wobei die Wärmeübertragungsflächen durch Wandungen der Rohre gebildet sind.

Grundsätzlich kann die Vorrichtung in modularer Weise aus mehreren hohlen Bereichen und mindestens einem Aufnahmebereich ausgebildet sein. Bei der konkreten Anordnung kann auf den jeweiligen Anwendungsfall abgestellt werden.

So kann in besonders vorteilhafter Weise der Aufnahmebereich durch mehrere vorzugsweise konzentrisch angeordnete oder ausgebildete Ringräume jeweils zwischen Wärmeübertragungsflächen der hohlen Bereiche oder jeweils zwischen hohlen Bereichen gebildet sein. Je nach Empfindlichkeit des zu behandelnden Fluids können unterschiedlich gestaltete Vorrichtungen oder Behälter bereitgestellt werden.

Weiterhin im Hinblick auf ein besonders sicheres und gleichmäßiges Einfrieren eines Fluids können die Ringräume untereinander strömungsverbunden sein. Hierdurch lassen sich eventuell auftretende Temperaturdifferenzen unter den Ringräumen sicher ausgleichen.

Sämtliche hohlen Bereiche oder einer oder mehrere hohle Bereiche können mit dem Wärmeübertragungsmedium durchströmt werden.

Die erfindungsgemäße Vorrichtung ist weiterhin besonders vorteilhaft im Hinblick auf eine Anordnung mehrerer derartiger Vorrichtungen zu beispielsweise Lager- und/oder Transportzwecken. Dabei kann in vorteilhafter Weise ein Träger mit mehreren derartigen Vorrichtungen realisiert sein, wobei der Träger ein Grundelement zur Anordnung der Vorrichtungen auf dem Grundelement aufweist. Ein derartiges Grundelement kann beispielsweise durch ein Gestell zur Anordnung der Vorrichtungen gebildet sein. Dabei ist von großem Vorteil, dass die Einfrierbedingungen in den einzelnen Vorrichtungen durch das Anordnen der Vorrichtungen zu größeren Gruppen aufgrund des erfindungsgemäßen Aufbaus der einzelnen Vorrichtungen nicht verändert werden. Hierdurch ist ein Scale-Up aus der Erprobung bis hin zur Produktion auf einfache Weise möglich. Bei Beschädigung einer einzelnen Vorrichtung oder eines einzelnen Behälters wird der Inhalt der übrigen Vorrichtungen oder Behälter eines Trägers oder Skids nicht beeinträchtigt. Im Ergebnis ist ein vereinfachtes Scale-Up möglich, wobei die damit verbundene Validierung der Einfrierbedingungen für größere Fluidmengen kürzer und weniger kostenintensiv ist, als dies bei bisherigen Vorrichtungen der Fall ist.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen und geschnittenen Ansicht von einer Seite ein Ausführungsbeispiel der erfindungsgemäßen Vorrichtung,
- Fig. 2: in einem Querschnitt das Ausführungsbeispiel aus Fig. 1,
- Fig. 3: in einer schematischen Seitenansicht einen Träger mit mehreren Vorrichtungen gemäß dem Ausführungsbeispiel aus Fig. 1 und
- Fig. 4: in einer schematischen Draufsicht den Träger aus Fig. 3.

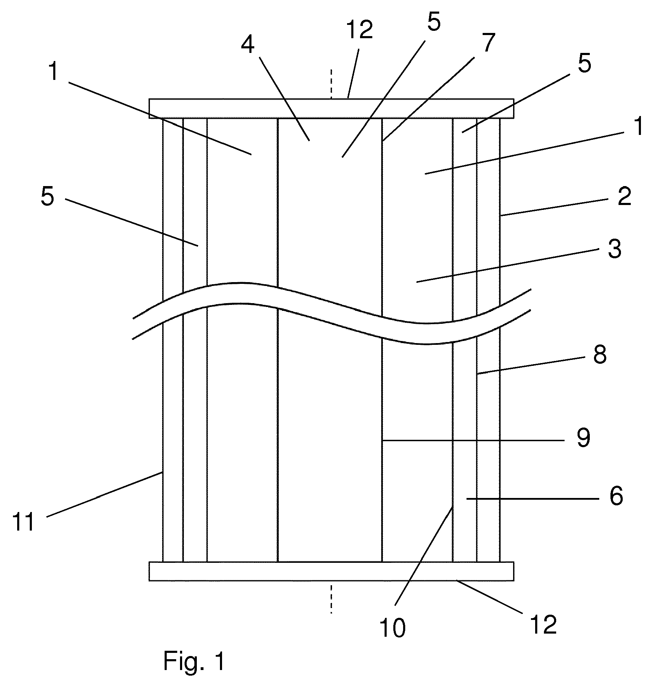

Fig. 1 zeigt in einer schematischen und geschnittenen Seitenansicht ein Ausführungsbeispiel einer erfindungsgemäßen Vorrichtung zum Einfrieren, Transportieren, Lagern und/oder Auftauen von Fluiden 1. Die Vorrichtung weist einen Behälter 2 zur Aufnahme des Fluids in einem Aufnahmebereich 3 des Behälters 2 auf, wobei in dem Behälter 2 zusätzlich ein hohler Bereich 4 zur Aufnahme eines Wärmeübertragungsmediums 5 für das Fluid 1 ausgebildet ist. Im Hinblick auf ein besonders sicheres und gleichmäßiges Einfrieren des Fluids mit konstruktiv einfachen Mitteln ist in dem Behälter 2 ein weiterer hohler Bereich 6 zur Aufnahme eines Wärmeübertragungsmediums 5 für das Fluid 1 ausgebildet. Dabei kann der Einfachheit halber das gleiche oder der gleiche Typ Wärmeübertragungsmedium 5 in beiden hohlen Bereichen 4 und 6 verwendet werden. Die Wärmeübertragung kann entweder von dem Fluid 1 zum Wärmeübertragungsmedium 5 - Einfrieren - oder umgekehrt - Auftauen - erfolgen.

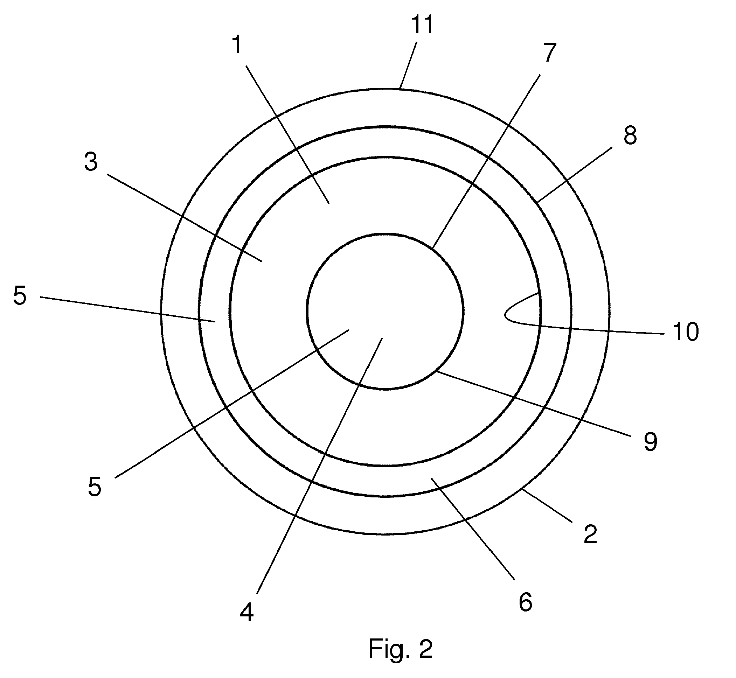

Fig. 2 zeigt in einer schematischen geschnittenen Darstellung durch den Behälter 2 aus Fig. 1 besonders deutlich, dass der weitere hohle Bereich 6 derart in dem Behälter 2 ausgebildet ist, dass eine Wärmeübertragung auf das Fluid 1 und/oder von dem Fluid 1 von mindestens zwei Seiten aus realisierbar ist. Im Konkreten ist der hohle Bereich 4 derart in einem durch den weiteren hohlen Bereich 6 gebildeten Raumbereich ausgebildet, dass sich der Aufnahmebereich 3 zwischen dem hohlen Bereich 4 und dem weiteren hohlen Bereich 6 erstreckt. Der hohle Bereich 4 und der weitere hohle Bereich 6 sind als Rohr 7 bzw. 8 ausgebildet, wobei der weitere hohle Bereich 6 als Ringraum um den Aufnahmebereich 3 ausgebildet ist. Der Aufnahmebereich 3 ist wiederum als Ringraum um den hohlen Bereich 4 ausgebildet. Dabei ist der Aufnahmebereich 3 als Ringraum zwischen einer Wärmeübertragungsfläche 9 des hohlen Bereichs 4 und einer Wärmeübertragungsfläche 10 des weiteren hohlen Bereichs 6 ausgebildet. Mit anderen Worten ist der Aufnahmebereich 3 als Ringraum zwischen dem hohlen Bereich 4 und dem weiteren hohlen Bereich 6 ausgebildet, wobei der hohle Bereich 4, der Aufnahmebereich 3 und der weitere hohle Bereich 6 konzentrisch zueinander angeordnet oder ausgebildet sind.

Der Behälter 2 ist zylinderförmig ausgebildet, wobei der Behälter 2 eine äußere Isolierung 11 aufweist, die den weiteren hohlen Bereich 6 umschließt. Auf der Oberseite und der Unterseite des Behälters 2 ist jeweils ein Flansch 12 angeordnet. Auch dieser Flansch 12 kann eine Isolierung für den Behälter 2 bilden oder aufweisen.

Der hohle Bereich 4 ist quasi durch ein in dem hohlen Bereich 6 angeordnetes Rohr 7 gebildet, wobei der hohle Bereich 6 ebenfalls als Rohr 8 mit einer Innenwandung und einer Außenwandung ausgebildet ist. Zwischen diesen Rohren 7 und 8 ist das Fluid 1 im Aufnahmebereich 3 angeordnet.

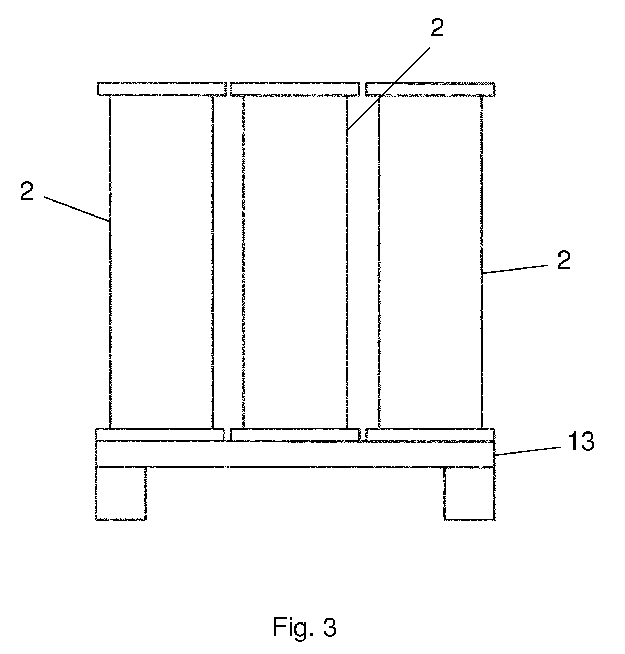

Fig. 3 zeigt in einer schematischen Seitenansicht einen Träger mit einem Grundelement 13 und auf dem Grundelement 13 angeordneten Vorrichtungen oder Behältern 2. Dabei sind die Vorrichtungen oder Behälter 2 als gemeinsam handhabbare Anordnung auf dem Grundelement 13 angeordnet. Hierdurch sind ein einfacher Transport und eine einfache Lagerung und gegebenenfalls Stapelung der Behälter 2 oder Vorrichtungen ermöglicht.

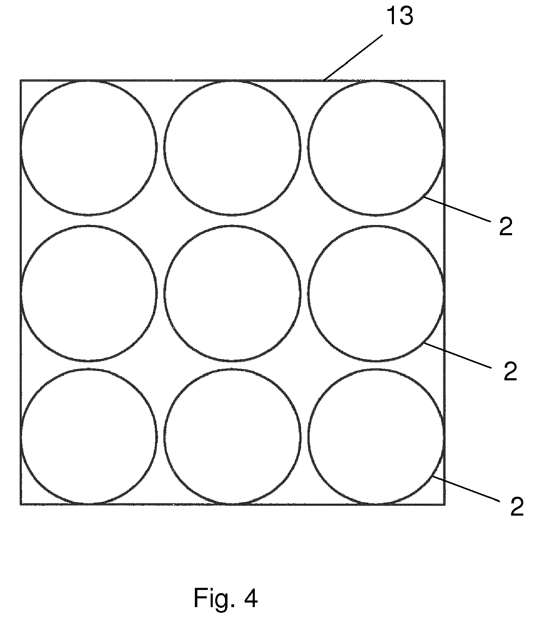

Fig. 4 zeigt die Anordnung aus Fig. 3 in einer Draufsicht.

Die vorliegende Erfindung zeichnet sich durch einen flexiblen modularen Aufbau mit mehreren Wärmeübertragerrohren 7, 8 aus. Die Anordnung aus mehreren ineinander angeordneten Rohren 7, 8 ermöglicht eine geringe Dicke der einzufrierenden Fluidschicht und stets eine gleiche Entfernung der Wärmeübertragungsflächen 9, 10 zueinander. Hierdurch wird eine Kryokonzentration vermieden.

Bei einer Anordnung mehrerer erfindungsgemäßer Vorrichtungen auf einem Träger oder Grundelement 13 ist eine sichere Einfrierbedingung für jede einzelne Vorrichtung und jeden einzelnen Behälter 2 aufgrund des erfindungsgemäßen Aufbaus der Vorrichtung oder des Behälters 2 ermöglicht. Bei Beschädigung einer einzelnen Vorrichtung oder eines einzelnen Behälters 2 wird der Inhalt der übrigen Vorrichtungen oder Behälter 2 eines Trägers nicht beeinträchtigt.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiel der erfindungsgemäßen Vorrichtung lediglich zur Erörterung der beanspruchten Lehre dient, diese jedoch nicht auf das Ausführungsbeispiel einschränkt.

### Bezugszeichenliste

- 1: Fluid
- 2: Behälter
- 3: Aufnahmebereich
- 4: hohler Bereich
- 5: Wärmeübertragungsmedium
- 6: weiterer hohler Bereich
- 7: Rohr
- 8: Rohr
- 9: Wärmeübertragungsfläche
- 10: Wärmeübertragungsfläche
- 11: Isolierung
- 12: Flansch
- 13: Grundelement

## Patentansprüche

1. Vorrichtung zum Einfrieren, Transportieren, Lagern und/oder Auftauen von Fluiden (1), insbesondere biopharmazeutisch hergestellten Wirkstoffen und Produkten, mit einem Behälter (2) zur Aufnahme eines Fluids (1) in einem Aufnahmebereich (3) des Behälters (2), wobei in dem Behälter (2) zusätzlich ein hohler Bereich (4) zur Aufnahme eines Wärmeübertragungsmediums (5) für das Fluid (1) ausgebildet oder angeordnet ist,
**dadurch gekennzeichnet, dass** in dem Behälter (2) mindestens ein weiterer hohler Bereich (6) zur Aufnahme eines Wärmeübertragungsmediums (5) für das Fluid (1) ausgebildet oder angeordnet ist.

2. Vorrichtung nach Anspruch 1, **dadurch gekennzeichnet, dass** der mindestens eine weitere hohle Bereich (6) derart in dem Behälter (2) ausgebildet oder angeordnet ist, dass eine Wärmeübertragung auf das Fluid (1) und/oder von dem Fluid (1) von mindestens zwei Seiten aus realisierbar ist.

3. Vorrichtung nach Anspruch 1 oder 2, **dadurch gekennzeichnet, dass** der hohle Bereich (4) derart in einem durch einen der weiteren hohlen Bereiche (6) gebildeten Raumbereich ausgebildet oder angeordnet ist, dass sich der Aufnahmebereich (3) zumindest bereichsweise zwischen dem hohlen Bereich (4) und dem mindestens einen weiteren hohlen Bereich (6) erstreckt.

4. Vorrichtung nach einem der Ansprüche 1 bis 3, **dadurch gekennzeichnet, dass** der hohle Bereich (4) ein Rohr (7) aufweist oder als Rohr (7) ausgebildet ist.

5. Vorrichtung nach einem der Ansprüche 1 bis 4, **dadurch gekennzeichnet, dass** der mindestens eine weitere hohle Bereich (6) ein Rohr (8) aufweist.

6. Vorrichtung nach einem der Ansprüche 1 bis 5, **dadurch gekennzeichnet, dass** der mindestens eine weitere hohle Bereich (6) als Ringraum, vorzugsweise um den Aufnahmebereich (3) und/oder den hohlen Bereich (4), ausgebildet ist.

7. Vorrichtung nach einem der Ansprüche 1 bis 6, **dadurch gekennzeichnet, dass** der Aufnahmebereich (3) als Ringraum, vorzugsweise zwischen einer Wärmeübertragungsfläche (9) des hohlen Bereichs (4) und einer Wärmeübertragungsfläche (10) des mindestens einen weiteren hohlen Bereichs (6) oder zwischen dem hohlen Bereich (4) und dem mindestens einen weiteren hohlen Bereich (6), ausgebildet ist.

8. Vorrichtung nach einem der Ansprüche 1 bis 7, **dadurch gekennzeichnet, dass** der Aufnahmebereich (3) durch mehrere Ringräume jeweils zwischen Wärmeübertragungsflächen (9, 10) der hohlen Bereiche (4, 6) oder jeweils zwischen hohlen Bereichen (4, 6) gebildet ist.

9. Vorrichtung nach Anspruch 8, **dadurch gekennzeichnet, dass** die Ringräume untereinander strömungsverbunden sind.

10. Träger mit mehreren Vorrichtungen nach einem der Ansprüche 1 bis 9, wobei der Träger ein Grundelement (13) zur Anordnung der Vorrichtungen auf dem Grundelement (13) aufweist.
